# EUROPÄISCHE PATENTSCHRIFT

(11) **EP 1 180 634 B1**
(45) Veröffentlichungstag und Bekanntmachung des Hinweises auf die Patenterteilung: **16.03.2005**
(21) Anmeldenummer: 01120031.8
(22) Anmeldetag: 20.08.2001
(51) Int. Cl.: F16L 37/40

(54) **Kupplung für unter Druck stehende Medien**
Coupling for pressurized fluids
Raccord pour fluides sous pression

(30) Priorität: 19.08.2000 DE 10040687
(43) Veröffentlichungstag der Anmeldung: 20.02.2002
(73) Patentinhaber: Carl Kurt Walther GmbH & Co. KG, 42781 Haan (DE)
(72) Erfinder: Kaul, Dr.Wolfgang, 42369 Wuppertal (DE)
(74) Vertreter: Müller, Enno, Dipl.-Ing.

(56) Entgegenhaltungen:
- CH-A- 553 366
- DE-A- 2 304 796
- DE-A- 4 419 777
- DE-A- 19 724 120
- DE-U- 29 620 233
- US-A- 4 366 945

## Beschreibung

Die Erfindung bezieht sich auf eine Kupplung für unter Druck stehende Medien, mit einem Patrizenteil und einem Matrizenteil, gegebenenfalls einem steckabhängig entgegen Federkraft durch einen Nippel des Patrizenteiles verlagerbaren Ventilkörper, einer auf dem Matrizenteil angeordneten Verriegelungshülse und einer mediendruckabhängigen Sicherung (siehe, zum Beispiel, DE-U-296 20 233).

Es besteht der Vorschlag eines durch Mediendruck gesteuerten Sperrstiftes als mechanische Fangsperre. Der Sperrstift ist ein nach radial außen wirkender Kolben mit Dichtung und Rückholfeder. Vor allem infolge Kleinheit der Bauteile sind die Funktionskräfte gering. Die Gebrauchssicherheit ist nicht gegeben.

Aufgabe der Erfindung ist es, gattungsgemäße Kupplungen unter Sicherheitsaspekten zu verbessern.

Diese Aufgabe ist bei einer Kupplung mit den Merkmalen des Anspruchs 1 gelöst, wobei darauf abgestellt ist, dass die Sicherung durch eine unter Mediendruck gegen die Rückstellkraft expandierende und an dem Matrizenteil sperrgehalterte Dichtung erreicht ist. Die durch den Mediendruck gegebene, hochwirksame Dichtung erfüllt eine Zusatzfunktion, und zwar die eines Sperrriegels gegenüber der Verriegelungshülse. Der läßt sich baulich relativ groß auslegen. Die Funktionskräfte sind entsprechend hoch. Diese restdruckgesteuerte Mechanik wirkt gleichsam als Formschlussanschlag. Unter willensbetonter Einleitung der Entriegelung kommt es zum Druckabbau. Die Dichtung wird aus ihrer Expansion entlassen. Ihre Rückstellkraft stellt den Entsperrhub. Die Druckabbaustellurig ist als gefangene Stellung definiert. Es kommt also nicht zu dem bei unter Druck arbeitenden sogenannten Sicherheitskupplungen bislang dennoch zu beobachtenden Peitscheneffekt beim Trennen. Bekanntlich wird das Kupplungsteil durch den plötzlich freiwerdenden Druck gefahrbildend weggeschleudert. Die geschilderte Mechanik ist in der Teilezahl gering und trotzdem funktionsmäßig zuverlässig.

Das kann auch an einer Kupplung vorgesehen sein für unter Druck stehende Medien, mit einem Patrizenteil und einem Matrizenteil, einem steckabhängig entgegen Federkraft durch einen Nippel des Patrizenteiles verlagerbaren Ventilkörper, einer auf dem Matrizenteil angeordneten Verriegelungshülse, wobei das Patrizenteil bei einer Entriegelung durch diese zunächst nur in eine gefangene Druckabbaustellung zu bewegen ist, und wobei weiter das Verfahren in die Druckabbaustellung aufgrund mit der Verriegelungshülse zusammenwirkenden, mediandruckabhängigen Sicherung gewährleistet ist.

Auch dem Ziel der Sicherheit der Kupplung dienend, wird sodann vorgeschlagen, dass die Zweischritt-Sicherung (gefangene Druckabbaustellung, Kupplungsfreigabestellung) durch zwei axial hintereinander angeordnete, je durch eine gesonderte Feder beaufschlagte, radial mit dem Nippel des Patrizenteiles zusammenwirkende Sperrorgane erreicht ist. Die stellen ein Hauptriegelsystem und ein Nebenriegelsystem. Für letzteres sind die nippelseitigen Vorkehrungen mit verwendet. Die entsprechende, nicht überlaufbare Fangrast tritt automatisch in Wirkung.

Sodann wird an einer erfindungsgemäßen Kupplung, umfassend Patrizenteil und Matrizenteil, vorgeschlagen, dass eine Ringdichtung axial verschieblich und jedenfalls bei Betriebsbedingungen in Richtung des Patrizenteiles druckbelastet ist. Das ergibt eine einfache Zuordnung, anpassungsfähige Einstellung und überdies eine vibrationsunanfällige Dichtung. Die optimale Dichtungsanlage wird unter Nutzung des Mediendrucks bewirkt. Im gleichen Sinne kann die Ringdichtung federbelastet sein. Das Ganze eröffnet den Vorteil, dass die im Matrizenteil angeordnete Ringdichtung zum Abdichten des Patrizenteiles zum Matrizenteil fallweise, je nach Kontur des Patrizenteiles, als Stirndichtung oder aber als Umfangs- respektive Überfahrdichtung wirkt. In diesem Zusammenhang von Vorteil ist dabei weiter, dass ein Innendurchmesser der Ringdichtung auf einen Außendurchmesser eines am Umfang abzudichtenden Nippels abgestellt ist und dass ein Außendurchmesser unter Berücksichtigung einer Anschlagüberdeckungsfläche zugleich auf einen stirnseitig abzudichtenden Nippel abgestellt ist.

Zurückkommend auf die die Sicherung stellende Dichtung besteht eine vorteilhafte Ausgestaltung darin, dass die Sicherung respektive im vorliegenden Fall auch bevorzugt als Dichtung eine Umfangsdichtung ist. Das ergibt einen rotationssymmetrischen Sperreingriff, so dass die Sperrtiefe recht gering sein kann. Bevorzugt besteht die Sicherung aus Gummi oder einem gummiähnlichen Kunststoff oder anderem Elastomer. In Anbetracht des radial auswärts gerichteten Sperrhubes und umgekehrt radial einwärts gerichteten Freigabehubes erweist es sich als vorteilhaft, dass die Sicherung einen radial orientierten Rechteckquerschnitt aufweist. Es liegt eine selbst bei starken Mediendrucken verdrehgesicherte Selbstführung vor. Bevorzugt liegt die längere Rechteckseite in der Hubrichtung, die ihrem Charakter nach auch eine überlagernde Umfangsbewegung, eben Dehnung, bezüglich des Ringverlaufes hat. Weiter ist vorgesehen, dass die Sicherung im Sperrzustand nur einen Bruchteil über matrizenteilfeste, die Axialbeweglichkeit des Sicherung hindernde Führungen vorsteht. Das Ganze ist baulich einfach lösbar, indem die Führungen durch parallele Flanken einer mantelwandseitigen Ringnut des Matrizengehäuses gebildet sind. Da es sich überwiegend um rotationssymmetrische Bauteile handelt, lässt sich die Ringnut im Wege des Drehens präzise erzeugen. Eine vorteilhafte Variante besteht sodann darin, dass eine Führung radial verläuft und eine von einer auswärts verengend gestellten Flanke der Ringnut gebildet ist und die Sicherung eine O-Ring-Dichtung ist. Es kann dabei von einem kreisrunden Querschnitt ausgegangen werden. Da die radiale Dehnung der O-Ring-Dichtung zu einer Querschnittsverminderung führt, kann dieser Hinterschnitt bestens angewandt werden. Man kann sogar so weit gehen, das beide Führungen von schwalbenschwanzformenden Flanken der Ringnut gebildet sind. Es kommt dabei hier zu einem außengerundeten, exponierten Riegelkopf. Den Anschluss an das Druckmedium erhält man in beiden Fällen dabei einfach dadurch, dass auf dem Grund der eine Druckkammer stellenden Ringnut ein Verbindungskanal zum Durchströmweg der Kupplung hin realisiert ist. Eine gute Druckverteilung ergibt sich, wenn dem Grund der Ringnut ein umlaufender Lippenspalt der so U-förmigen Querschnitt aufweisenden Dichtung zugewandt ist. Hierüber ergibt sich eine einwandfrei arbeitende Lippendichtung. Andererseits muss der Wurzelbereich dieser Lippendichtung, da sperrkopfbildend, von genügender mechanischer Festigkeit sein. Der sperraktive Außenpart der Dichtung bzw. Sicherung ist daher axialkraft-stabil ausgebildet. Das kann durch Kombinationsspritzen (hart, weich) erzeugt werden. Andererseits besteht aber auch eine vorteilhafte Möglichkeit in Form einer Armierung des axialkraft-stabilen Außenparts. Die erbringen z.B. multiple Hartfelder und belassen zwischen den Armierungen ausreichend Material zur Erzielung der Rückstellkraft der expandierfähigen Sicherung. Die verriegelungshülsenseitigen Gegenblockierungsmittel sind ebenfalls einfach und zweckmäßig. Das verkörpert sich darin, dass die Sicherung im Blockierungszustand mit einem nach radial innen vorragenden, verriegelungshülsenseitigen Umfangsvorsprung zusammenwirkt. Der ist anschlagbildend an einem in der Verriegelungshülse anschlagbegrenzt axial verlagerbar aufgenommenen ersten Schieber ausgeformt. Dem ersten Schieber ist ein ebenfalls axial anschlagbegrenzt verlagerbarer zweiter Schieber zugeordnet. Weiter ist vorgesehen, dass die radiale Höhe des Umfangsvorsprunges dem radialen Rückstellhub der Dichtung entspricht. Hier kann, wie oben schon ausgeführt, mit geringen Hubwegen gearbeitet werden. Hinsichtlich der O-Ring-Dichtung als Sicherung ist eine Ausgestaltung geschaffen, die darin besteht, dass die Sicherung mit einem formangepasst gestalteten Umfangsvorsprung des ersten Schiebers zusammenwirkt. Diese Lösung ist baulich weiter gekennzeichnet durch eine an die ausragende O-Ring-Dichtungs-Kontur angepasste, an den Umfangsvorsprung axial anschließende Ringmulde. Hier kommt es zum fangenden und freigebenen Formschluss.

Zurückkommend auf die Zweischritt-Sicherung und deren Mittel, liegt eine Ausgestaltung dahingehend vor, dass die Sperrorgane Walzenkörper sind. Die vereinfachen die Mechanik. Statt einer bei Sperrkugeln im Wesentlichen punktförmigen Anlage zur kegelstumpfförmigen Sperrflanke des Nippels hin, weisen Walzenkörper mehr eine lineare bzw. mit der Zeit sogar flächige Anlage auf. Es zeichnet sich nämlich als Eindrückung eine Art Ringmulde am von Hause aus zylindrischen Walzenkörper ab. Das eröffnet sogar eine selbstzentrierende Wirkung. Weiter steht in Vorschlag, dass jeder Walzenkörper über einen Ringflansch federbeaufschlagt ist, wobei einer der Ringflansche einen Hülsenabschnitt aufweist, der zur Federbeaufschlagung den anderen Ringflansch durchsetzt. Ein solcher ineinandergschachtelter Aufbau ist wenig auftragend, führt also insgesamt zu einer schlanken Kupplung. Darüber hinaus wird vorgeschlagen, dass der durchsetzende Part Füße sind, gegen deren freies Stirnende die korrespondierende Feder wirkt. Entsprechend ist auch bezüglich der Federanordnung eine raumsparende Lösung eröffnet, indem die Federn Schraubengang-Druckfedern sind, in ineinandergeschachtelter Anordnung. Bezüglich der Aufnahmen der Walzenkörper wird erfindungsgemäß vorgeschlagen, dass die Walzenkörper in an dem Matrizengehäuse ausgebildeten, schräg nach vorne, d.h. der Kupplungsfuge zugewandt konvergierend, ausgerichteten Schlitzen aufgenommen sind. Hierdurch kann man die Kupplung durch Steckverbindung der sie bildenden Teile schließen, ohne dazu die Verriegelungshülse betätigen zu müssen, Vorteil einer Einhandbedienung also. Demgemäß ist auch vorgesehen, dass die Schlitze beider Walzenkörper-Paare gleichgerichtet verlaufen. Weiter ist diese Ausgestaltung gekennzeichnet durch eine eine axiale Nischenschulter bildende Schlitzerbreiterung an der inneren Flanke des kupplungsfugenfernen Schlitzes. Das gibt Raum für den Resthub, ohne dass durch das weitere Austreiben der Walzenkörper das Gehäuse der Kupplung vergrößert werden müsste . Schließlich bringt die Erfindung noch in Vorschlag, dass die Ringdichtung bei nippelstirnseitiger Abdichtung des Patrizenteiles von einer an dem Matrizenteil ausgeformten Anschlagflanke unter Komprimierung der die Ringdichtung beaufschlagenden Feder abgehoben ist. Das erhöht die Zusammendrückwirkung und damit Dichtwirkung dieser Lösung. In Gegenrichtung presst die Federkraft den Dichtungskörper. Der ist federseitig zweckmäßig ringbelegt. Endlich ist noch von Vorteil, dass die Ringdichtung bei radialer Abdichtung am Umfang des Nippels des Patrizenteils durch die Feder gegen die Anschlagflanke gedrückt ist mit radial einwärts gerichteter Andrückkomponente zur korrespondierenden Mantelwand des Nippels hin. So liegt eine funktionsfähige Kompatibilität von Nippeln vor.

Dieses geschilderte Konzept hat auch für Schieberlösungen solcher Kupplungen Bedeutung, wie dies weiter unten im speziellen Teil der Beschreibung näher erörtert ist.

Der Gegenstand der Erfindung ist nachstehend anhand eines zeichnerisch veranschaulichten Ausführungsbeispieles näher erläutert. Es zeigt:
- Fig. 1: die Kupplung gekuppelt, versehen mit einer stirnseitig des Nippels wirkenden Ringdichtung (soweit die Kupplung vollständig wiedergegeben ist, sind die Figuren im Halbschnitt dargestellt) ,

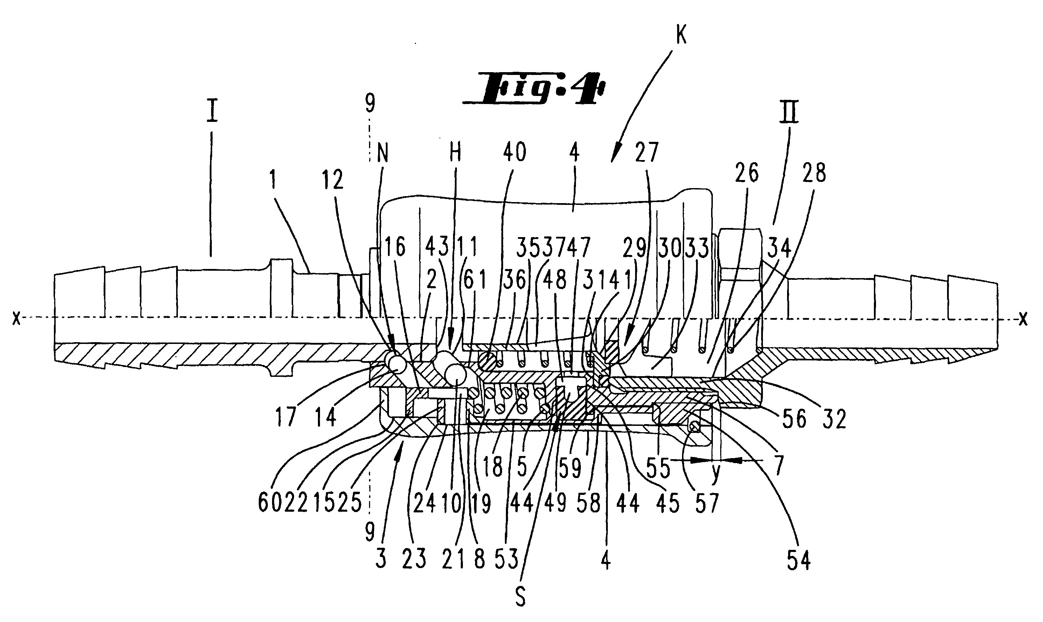

- Fig. 2: den Schnitt gemäß Linie II-II, ein Hauptriegelsystem veranschaulichend, die Sperrorgane widergebend in Rast- und Freigabestellung,
- Fig. 3: den Schnitt gemäß Linie III-III in Figur 1, ein Nebenriegelsystem veranschaulichend, die Sperrorgane wiedergebend in Rast- und Freigabestellung,
- Fig. 4: die Kupplung nach einem ersten Entriegelungsschritt,
- Fig. 5: die Kupplung nach einem zweiten Entriegelungsschritt,
- Fig. 6: die Kupplung entkuppelt bzw. in Kupplungsbereitschaftsstellung,
- Fig. 7: die Kupplung gekuppelt, versehen mit einer am Umfang des Nippels wirkenden Ringdichtung,
- Fig. 8: diese Kupplung nach einem ersten Entriegelungsschritt,
- Fig. 9: die Kupplung nach einem zweiten Entriegelungsschritt,
- Fig. 10: die Kupplung entkuppelt bzw. in Kupplungsbereitschaftsstellung,
- Fig. 11: eine Herausvergrößerung aus Figur 1,

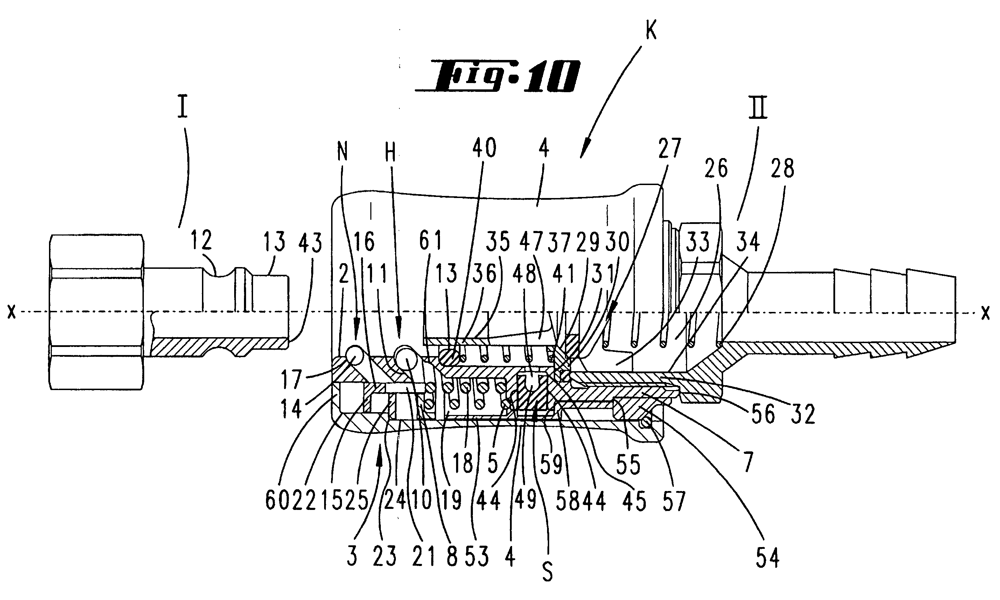

- Fig. 12: eine Herausvergrößerung aus Figur 5,
- Fig. 13: eine Herausvergrößerung wie Figur 11, zeigend eine Armierung in der Sicherung,
- Fig. 14: eine Ansicht gegen die Breitseite eines Abschnitts der Sicherung,
- Fig. 15: eine Ansicht wie Figur 14 mit abgewandelter Armierung,
- Fig. 16: einen Ventilkörper in isolierter Wiedergabe,
- Fig. 17: eine Stirnansicht hierzu,
- Fig. 18: den Ventilkörper in Einzeldarstellung, bezüglich seines Schaftes abgewandelt,
- Fig. 19: eine Stirnansicht hierzu,
- Fig. 20: eine Variante der Sicherung in Darstellungsweise wie Figur 11,
- Fig. 21: dasselbe in Funktionsstellung wie Figur 12 und
- Fig. 22: ein Ausführungsbeispiel der Kupplung, verkörpernd eine sogenannte Schieberlösung

Die dargestellte Kupplung K ist eine Schnellverschluss-Sicherheitskupplung mit Verriegelungsautomatik, prädestiniert zum Einsatz für unter Druck stehende Medien wie beispielsweise Druckluft.

Die Kupplung K ist auf eine Zweischritt-Sicherung respektive -Entriegelung hin konzipiert. Zum Entkupplungsvorgang gehört das Überwinden einer oberhalb einer definierten Druckschwelle nicht selbst überlaufbaren Fangstellung. Das Entkuppeln kann erst nach Druckabbau stattfinden. Die Druckerniedrigung geht bis deutlich unter den Gefahrenbereich. Der Restdruck ist schalttechnisch, gleichsam als Geber, genutzt und beeinflußt eine Formschlußschalteinrichtung in der Kupplung K. Die reagiert durch Entspannung.

Die Kupplung K besteht aus zwei Kupplungsteilen, einem Patritzenteil I und einem Matrizenteil II.

Das Patrizenteil I weist einen Nippel 1 auf; die zugehörige Buchse 2 wird vom Matrizenteil II gestellt. Der Nippel 1 kann unterschiedlicher Form sein, wie weiter unten noch im Einzelnen beschrieben.

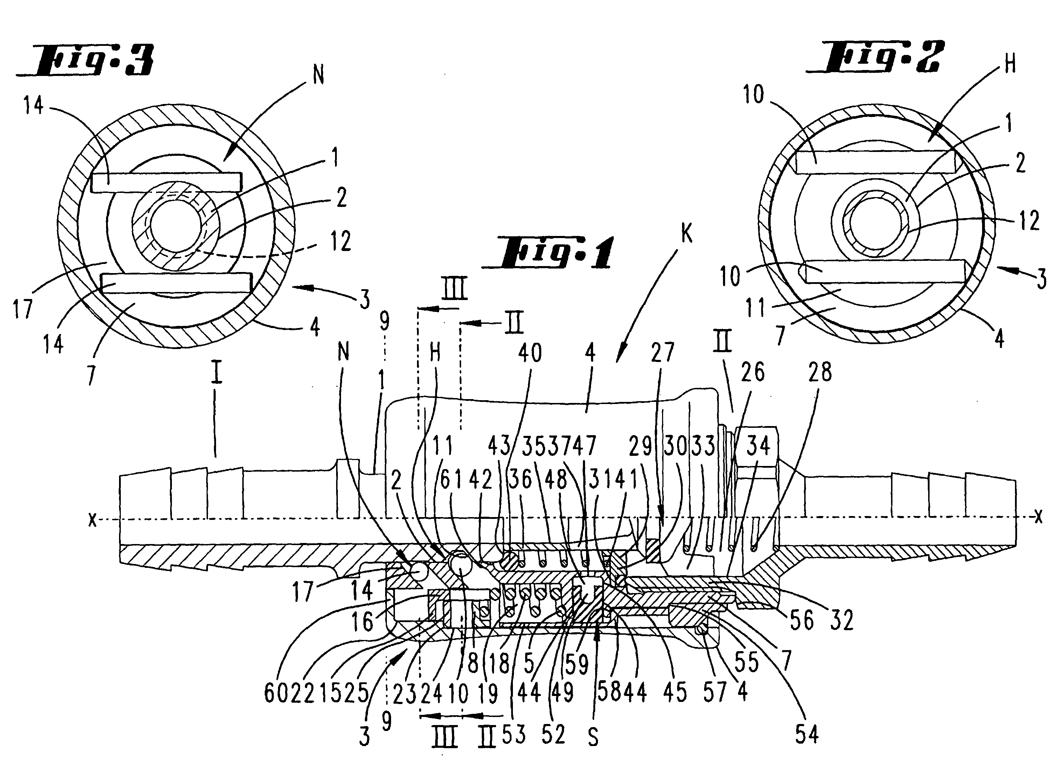

Die Steckverbindung, also Kupplungsstellung (vergleiche z.B. Figur 1) ist automatisch verriegelt. Hierzu dient eine als Ganzes mit 3 bezeichnete Verriegelungseinrichtung. Deren Betätigungsorgan, eine axial anschlagbegrenzt verlagerbare Verriegelungshülse 4, steht in Verriegelungsrichtung unter Federbelastung. Die Feder trägt das Bezugszeichen 5. Es handelt sich um eine Schraubengangs-Druckfeder. Ihre eine endständige Federwindung sitzt in einer peripheren Zentriermulde 6 eines Matrizengehäuses 7. Die andere endständige Federwirkung der unter Vorspannung stehenden Feder 5 belastet einen Ringflansch 8 eines Hauptriegelsystems H der Kupplung K.

Der Ringflansch 8 ist L-profiliert und trägt so zur Zentrierung der der Kupplungsfuge 9 zugewandten Endwindung der Feder 5 bei.

Der so belastete Ringflansch 8 wirkt gegen ein Sperrorgan 10. Das ist aussteuerbar in einem schräg nach vorne, d.h. der Kupplungsfuge 9 zugewandten Schlitz 11 geführt. Das Schlitzende schneidet den lichten Durchmesser der Buchse 2 des Matrizenteils II.

Das Sperrorgan 10 ist ein Walzenkörper. Etwa sein halber Querschnitt taucht in den lichten Durchmesser der Buchse 2 ein. Das dortige Schlitzende ist knapp dem halben kreisrunden Querschnitt des zylindrischen Walzenkörpers angepaßt entsprechend konkav ausgerundet.

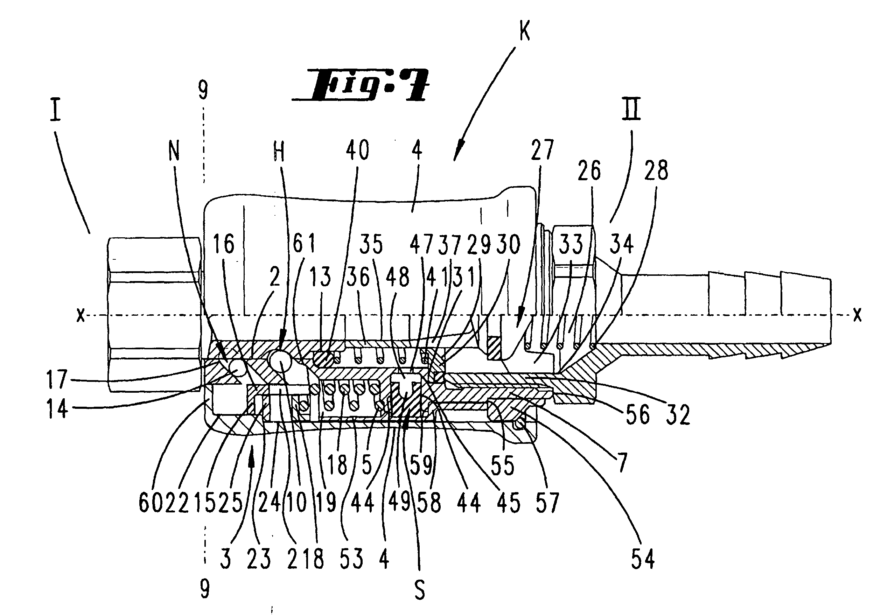

Bei gekuppelter Kupplung K greift das spiegelsymmetrisch paarig zugeordnete Sperrorgan 10 in eine Ringnut 12 des Nippels 1 verriegelnd ein. Es sei auf die Figuren 1 und 7 verweisen.

Die Ringnut 12 befindet sich in Bezug auf die Kupplungsfuge 9 endbeabstandet. Sie weist gemäß Figur 1 trapezförmigen Querschnitt auf mit mantelwandseitig vergrößerter Basis; die Variante gemäß Figur 7 zeigt dagegen eine kreisring-abschnittsförmige Kontur mit mantelwandseitig liegender Verbreiterung.

Während die Mantelwand des Nippels 1 sich zur Kupplungsfuge 9 hin wandungsmäßig in etwa gleicher Dicke wie der Fuß des Nippels 1 fortsetzt, sieht die Ausgestaltung gemäß Variante eine mantelwandseitige Querschnittsreduzierung vor, stellend eine abgesetzte zylindrische Nippelstufe 13. Die verläuft durchmessermäßig höhengleich mit dem Grund der Ringnut 12 und ist über einen Flankenwulst von diesem getrennt.

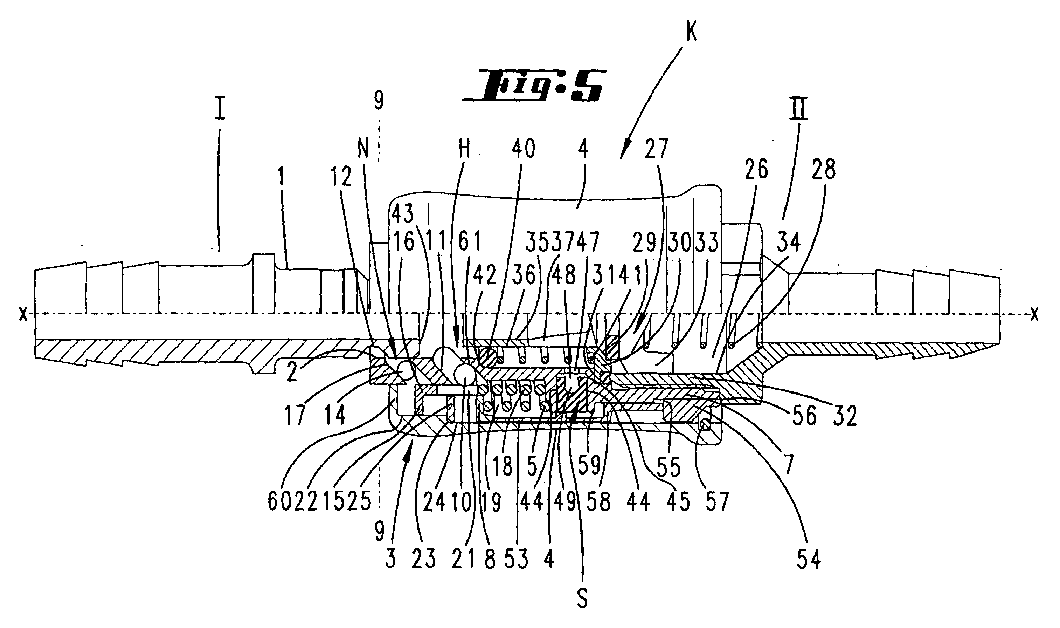

Das Nebenriegelsystem N ist hinsichtlich seiner Mechanik dem des Hauptriegelsystems H im Prinzip und in der baulichen Verkörperung vergleichbar. Es hat ein paarig vorgesehenes, spiegelsymmetrisch angeordnetes Sperrorgan 14. Seine zylinderwalzenförmige Gestalt ergibt sich aus Figur 3.

Das Nebenriegelsystem N sprich Sperrorgan 14 steht unter Federbelastung in Verriegelungsrichtung. Übertragen wird die Federkraft über einen Ringflansch 15. Auch dieser weist im Grunde L-förmigen Querschnitt auf, wobei das L hier gegenläufig ausgerichtet ist, also in der unteren, geschnittenen Hälfte der Kupplung K auf dem Kopf steht. Der kürzere L-Balken setzt sich in einen Hülsenabschnitt 16 fort. Der führt sich auf einem kupplungsfugenseitigen zylindrischen Mantelwandabschnitt des Matrizengehäuses 7.

Im zylindrischen Mantelwandabschnitt gelegen befindet sich auch der das Sperrorgan 14 geführt aufnehmende Schlitz 17. Der verläuft gleichsinnig geschrägt wie der Schlitz 11. Die Ausrichtung liegt bei 45° zur Längsmittelachse x-x der Kupplung K. Die paarigen Schlitze 11, 17 konvergieren in Richtung der Kupplungsfuge 9.

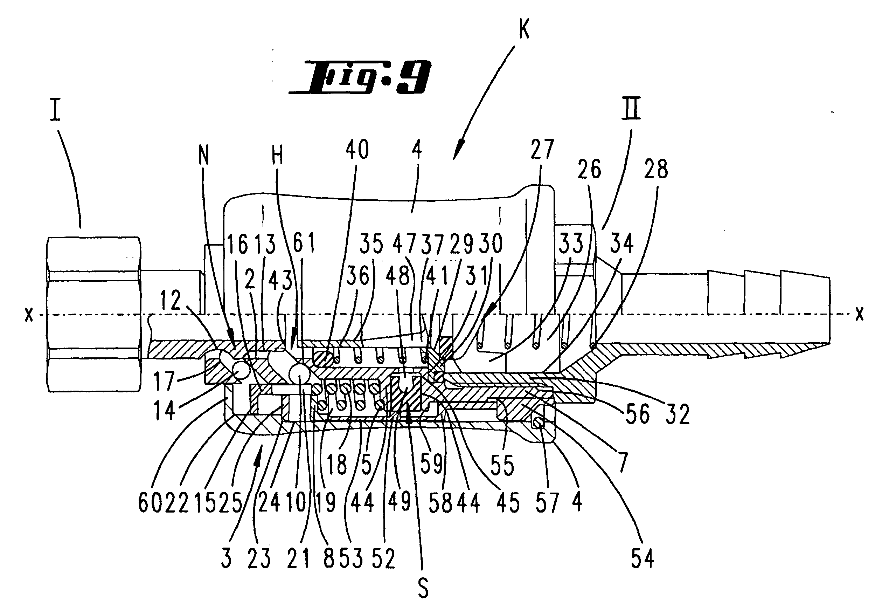

Wie den Figuren 6 und 10 entnehmbar, ragt auch hier das von einem zylindrischen Walzenkörper gebildete Sperrorgan 14, den lichten Durchmesser der Buchse 2 schneidend, in den Wirkungsbereich des Nippels 1 respektive seiner Ringnut 12, mit welcher es zusammenwirkt.

Das Nebenriegelsystem N der in Tandem-Anordnung liegenden beiden Riegelsysteme H,N erhält seine Belastung in Richtung des Verriegelungseingriffs durch eine vorgespannte Feder 18, gleichfalls realisiert als Schraubengang-Druckfeder. Letztere liegt der Längsmittelachse x-x näher. Beide Federn 5,18 sind in einer konzentrisch dazu liegenden Federkammer 19 untergebracht und befinden sich, raumsparend nahe zueinander gelegen, in ineinandergeschachtelter Anordnung.

Die Feder 18 des Nebenriegelsystems N stützt sich mit ihrer kupplungsfugenabgewandten Endwindung an einer neben der Zentriermulde 6 liegenden Stützfläche 20 ab. Die ist radial orientiert und befindet sich am Matrizengehäuse 7 an einer Ringwand gelegen. Zur dortigen Lagezentrierung kann gleichfalls eine Zentriermulde vorgesehen sein, und zwar konzentrisch verlaufend zur mit 6 bezeichneten. Ansonsten reicht aber auch der etwas querschnittsreduzierte Mantelwandabschnitt des Matrizengehäuses 7, welcher Abschnitt sich an den die schrägen Schlitze 11,17 aufweisenden anschließt, aus.

Die dem Ringflansch 15 zugewandte Endwindung der Feder 18 wirkt bezüglich des Sperrorgans 14 im Sinne der Verriegelungsstellung über den Hülsenabschnitt 16 auf das diesbezügliche Sperrorgan 14 ein. Für die entsprechende Beaufschlagungszugänglichkeit durchsetzt der Ringflansch 15 mit seinem Hülsenabschnitt 16, genauer mit diesem angeformten Füßen 21, zentral den anderen, äußeren Ringflansch 8. Die Endwindung der Feder 18 tritt gegen das freie Stirnende dieser den durchsetzenden Part bildenden Füße 21. Letztere wirken über die Walzenkörper - Sperrorgane 14 auf den Hülsenabschnitt 16 drehsichernd beziehungsweise in engen Grenzen drehbegrenzend. Die Füße 21 halten überdies den Schlitzeingang des Hauptriegelsystems H zu. Das diesbezügliche Sperrorgan 10 ist so betriebssicher eingelagert. Durch die Drehsicherung ist erreicht, dass die Zuhaltefunktion nicht aufgehoben wird.

Die gleiche Zuhalte-Aufgabe übernimmt der besagte Hülsenabschnitt 16 auch im Hinblick auf den Schlitz 17 des Nebenriegelsystems N.

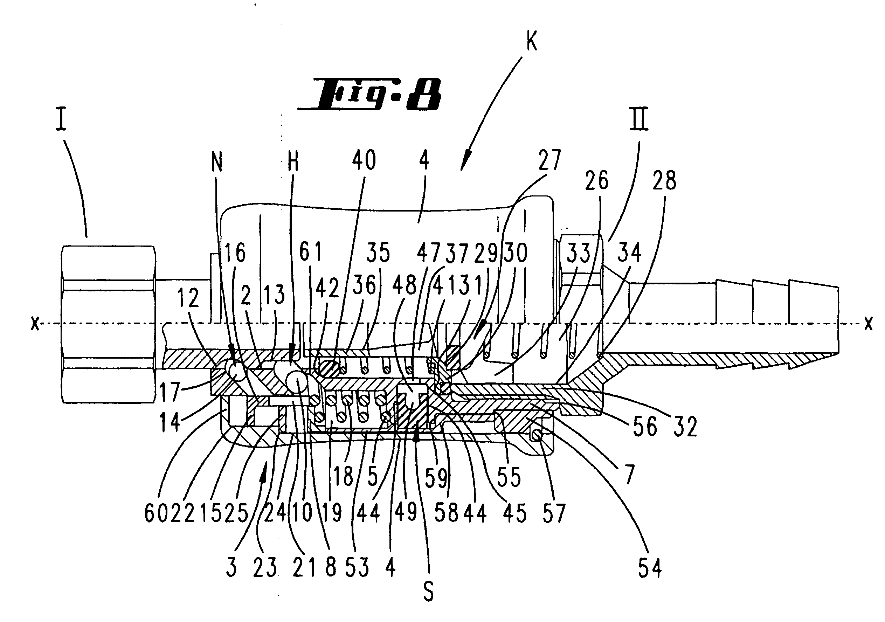

Die Peripherie des Ringflansches 15 steht vor einer zylindrischen Ausdrehung 22 der Verriegelungshülse 4. Diese Ausdrehung 22 geht über eine Stufe 23 in eine durchmessergrößere, gleichfalls zylindrische Innenwandung 24 über. An der Stufe 23 stützt sich eine Scheibe 25 ab. Letztere steht im Wirkungsbereich des Sperrorgans 10 des Hauptriegelsystems H. Hierüber lässt sich das Sperrorgan 10 entriegeln (Es sei auf die Figuren 4 und 8 verwiesen). Die Scheibe 25 setzt kupplungsfugenseitig auf das Sperrorgan 10 auf.

Das Matrizenteil II enthält einen den Durchströmweg 26 kontrollierenden Ventilkörper 27. Der steht in Schließrichtung unter Belastung durch eine vorgespannte Druckfeder 28. Außerdem steht der Ventilkörper 27 unter Mediendruck.

Die Schließfläche des Ventilkörpers 27 ist dichtungsbewehrt und wirkt mit einer gehäusefesten Ventilsitzfläche 29 zusammen. Gestellt wird sie von einem Ringkörper 30. Der sitzt in einer Haltenut 31. Letztere befindet sich zwischen einer Ringstufe des Matrizengehäuses 7 und einem schraubtechnisch zugeordneten Verschlussstück 32 der Kupplung K. Eine Dichtung ist, wie dargestellt, zwischengelegt.

Druckseitig weist der Ventilkörper 27 winkelgleich verteilte Führungsflügel 33 auf. Die gleiten an einer zylindrischen, den Durchströmweg 26 mitbildenden Ausdrehung 34 des Verschlussstücks 32.

Die Führungsflügel 33 bilden desweiteren mit ihren Innenflanken-Ansätzen die Zentrierung für die Druckfeder 28, die sich andernends gleichfalls zentriert verschlussstückseitig abstützt.

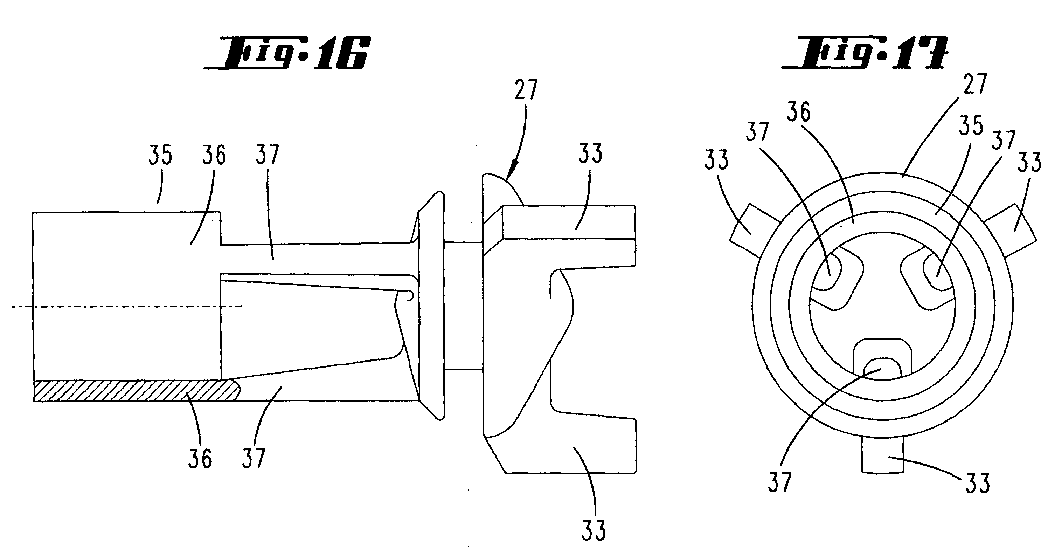

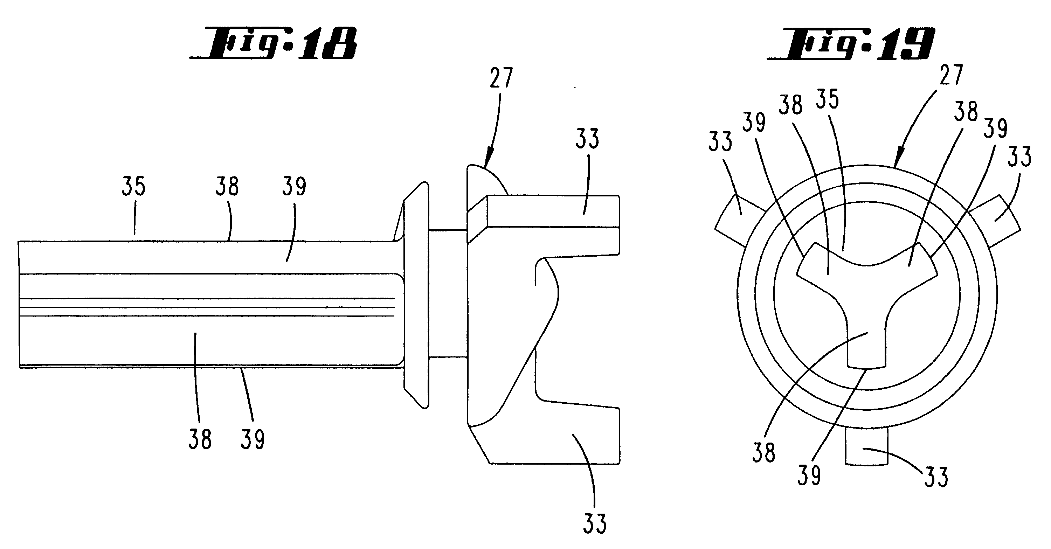

In Öffnungsstellung ist der Ventilkörper 27 im Bereich seines der Kupplungsfuge 9 zugewandten Schaftes 35 medienumströmbar. Der Schaft 35 ist - im Querschnitt gehen - gemäß Figuren 16,17 hohl-zylindrisch und gemäß Figuren 18,19 sternförmig.

Der hohl-zylindrische Part trägt das Bezugszeichen 36. Er ist im freien Endbereich des Schaftes 35 realisiert. Die Restlänge bis zur Dichtfläche des Ventilkörpers 27 wird von drei gleichwinkelig verteilten Radialstegen 37 überbrückt. Die belassen radiale Durchlässe in den Zwischenräumen.

Was den Ventilkörper 27 gemäß Variante Figuren 18,19 betrifft, so sind dort den Schaft 35 formende, gleichwinklig verteilt ausgerichtete, axial gemeinsam wurzelnde Stege 38 auf ganzer Länge des Schaftes 35 verwirklicht. Die peripheren Schmallängskanten 39 der Stege 38 sind nach einer gedachten zylindrischen Mantelfläche ausgerichtet, gewölbt entsprechend der des zylindrischen Parts 36 in Figur 17.

In beiden Ausprägungen erstrecken sich die Schäfte 35 in axialer Überlagerung zu einer sie umgebenden Ringdichtung 40. Am zylindrischen Part 36 stützt sich die Ringdichtung 40 nach radial innen ab.

Gemäß Grundversion Figur 1ff wirkt die Ringdichtung 40 stirnseitig des Nippels 1. Es sei auf Figur 1 verwiesen. Hier ist die Ringdichtung als O-Dichtung realisiert. Die führt sich auf dem zylindrischen Part 36 des Schaftes 35 beziehungsweise liegt in Kupplungsstellung daran dichtend an.

Erkennbar ist die Ringdichtung 40 dort axial verschieblich im Matrizenteil II angeordnet. Die Ringdichtung 40 steht in Richtung der Kupplungsfuge 9 unter Federbelastung. Diese Feder ist mit 41 bezeichnet. Es handelt sich um eine Schraubengang-Druckfeder. Sie stützt sich matrizengehäuseseitig am Ringkörper 30 ab. Ihre andere Entwindung sitzt unmittelbar, an der feder-zugewandten Breitfläche der Ringdichtung 40 an, bevorzugt unter Zwischenlage einer Ringscheibe (nicht dargestellt, da leicht vorstellbar).

In entkuppelter Stellung sitzt die Ringdichtung 40 gemäß Grundversion abgestützt an einer ortsfesten Anschlagflanke 42. Letztere entsteht als Abschluß einer federkammerbildenden Ausdrehung des Matrizengehäuses 7, längenmäßig sich im Bereich des Schafts 35 des Ventilkörpers 27 erstreckend.

Unter Herbeiführung der Kupplungsstellung hebt das steckgerecht durch die Buchse 2 zentrierte, zugehende Stirnende 43 des in Verriegelung tretenden Nippels 1 die Ringdichtung 40 von ihrer Anschlagflanke 42 entgegen der Kraft der Feder 41 ab. Das geschieht unter dichtender, elastischer Verformung der Ringdichtung 40 sowohl durch die Federkraft als auch durch das unter Druck stehende Medium. Es kommt zu einer vibrationsbelastbaren hochwirksamen, anpassungsfähigen Dichtung zwischen Patrizenteil I und Matrizenteil II durch pressendes Verformen des elastischen Dichtkörpers.

Gemäß Variante (Figuren 7ff) ist die Ringdichtung 40 mehr im Sinne einer radialen Abdichtung eingesetzt. Die Abdichtung findet hier patrizenseitig auf dem Umfang des Nippels 1 statt, und zwar auf der endseitig ausgebildeten, abgesetzten Nippelstufe 13. Gleichwohl ist dabei auch hier hinter dem Eingang der Federkammer der Feder 41 des Matrizengehäuses 7 die geschilderte Anschlagflanke 42 genutzt. Sie dient als kupplungsfugenseitiger Endanschlag für die in dieser Richtung federbeaufschlagte Ringdichtung 40. Diese steht innen radial beabstandet zur Mantelwand des zylindrischen Parts 36. Es liegt eine mehr hingelegte O-Querschnittsform vor, die erkennbar einen Spalt um korrespondierenden Ende des Schaftes 35 belässt. Die Ringhöhlung der Ringdichtung 40 ist von der Nippelstufe 13 beim Kuppeln überlaufbar. Durch die Kraft der Feder 41 kommt es dabei aber nicht zu einem friktionsbedingten, die Dichtung negativ beeinträchtigenden Mitschleppen der Ringdichtung 40 bzw. etwaige axiale Verlagerungen derselben werden rasch durch die Feder 41 wieder korrigiert, welche Feder 41 die Ringdichtung 40 letztlich in Anlage zur Anschlagflanke 42 hält oder sie zur Anlage bringt. Dabei kommt es zu einer vorteilhaften, radial einwärts gerichteten Andrückkomponente zur korrespondierenden Mantelwand des Nippels 1 sprich Nippelstufe 13 hin.

Insgesamt ist hier eine vibrationsunanfällige Dichtung erreicht aufgrund der kraftspeicherartig vorherrschenden Spannwirkung im Sinne eines Pressens der Ringdichtung 40, unterstützt auch noch durch den Druck des Mediums.

Das unter Druck stehende Medium ist auch im Hinblick auf die hier erzielte Zweischritt-Sicherung der Kupplung K sinnvoll angewandt. Bei Entriegeln der Kupplung K wird das Patrizenteil I nämlich zunächst - wie eingangs schon angedeutet - nur in eine gefangene Druckabbaustellung gebracht. Es handelt sich um eine sich automatisch ergebende Fangstellung, die nicht ohne einen weiteren Schritt aufhebbar ist bzw. es kommt in jedem Fall sicher zu einer Systementlüftung.

Erreicht wird das über ein die Verriegelungshülse 4 schaltendes Blockiersystem in Form eines ersten Anschlages, fungierend als Mediendruck abhängige Sicherung S.

Besagte Sicherung S ist eine unter Mediendruck gegen ihre Rückstellkraft expandierende und an dem Matrizenteil II sperrgehalterte Dichtung. Es handelt sich um eine Umfangsdichtung. Die wirkt wie ein Rundriegel mit peripher liegendem Sperrkopf.

Die erforderliche Aufweitbarkeit beruht auf der Verwendung eines entsprechend halbhart-plastischen und dennoch kraftvoll rückstellfähig weitbaren Materiales. Gedacht ist an Gummi oder ein gummiähnliches Material aus Kunststoff wie beispielsweise Elastomer.

Die radiale Verschieblichkeit unter Beibehaltung der Funktion als Dichtung ist dadurch optimiert, dass die Sicherung S im Grunde einen radial orientierten Rechteckquerschnitt aufweist. Die entsprechende Ausgestaltung geht aus der Zeichnung hervor. Erkennbar befindet sich die längere Rechteckseite in radialer Ausrichtung. Das Verhältnis der langen Rechteckseite zur kurzen ist etwa bei 2 : 1. Anstelle einer im Wesentlichen rechtekkigen Querschnitt aufweisenden Sicherung ist auch eine nichtkäntige Querschnittsform nutzbar, wie weiter unten erklärt.

Da der Sperrkopf rotationssymmetrisch wirkt, genügt es, dass die Sicherung S beziehungsweise Dichtung im Sperrzustand nur einen Bruchteil über matrizenteilfeste, die Axialbeweglichkeit der Sicherung S hindernde Führungen 44 vorsteht, beispielsweise 1 mm - 5 mm, bevorzugt 2 mm bei der zeichnerisch vorgestellten Spezifikation, liegend im 10 Bar-Bereich, bei einer Lochweite von ca. 6 mm.

Besagte Führungen 44 sind durch parallele Flanken einer mantelwandseitigen Ringnut 45 des Matrizengehäuses 7 erreicht. Die Übergänge zum Grund 46 der Ringnut 45 sind leicht konkav ausgerundet. In nicht sperrender Grundstellung steht die Dichtung, d.h. Umfangsdichtung in radialem Abstand zum besagten Grund 46. Die Ausrundungen bilden eine Art bremsenden Anschlags in Einwärtsrichtung.

Der Beaufschlagungs-Anschluss zum beziehungsweise durch das unter Druck stehende(n) Medium wird über einen radialen Verbindungskanal 47 erreicht. Der befindet sich im Grund 46 bzw. Boden der Ringnut 45. Das führt zur Verbindung mit dem mit 26 bezeichneten Durchströmweg der Kupplung K. Es können mehrere solcher Verbindungskanäle 47 in Form von Bohrungen ausgeführt sein.

Die über die Sicherung/Dichtung nach außen hin zugehaltene Ringnut 45 stellt so im unbesetzten Bereich eine Druckkammer 48, wobei die Dichtung als weitbarer Ringkolben fungiert.

Die Dichtung ist als Lippendichtung realisiert. So lässt sich auch schon bei minder hohem Druck eine gute Abdichtung und Radialdehnung erzielen. Außerdem wird eine bei Weitung auftretende Querschnittsschrumpfung der Dichtung bestens kompensiert.

Erreicht ist das dadurch, dass dem Grund 46 der Ringnut 45 ein umlaufender Lippenspalt 49 der so U-förmigen Querschnitt aufweisenden Dichtung zugewandt ist.

Die Dichtlippen sind von gleicher Gestalt und von den U-Schenkeln der Dichtung gebildet. Der U-Steg derselben dagegen ist relativ härter, dies schon zufolge größerer Materialanhäufung, so dass der eigentliche sperraktive Außenpart der Dichtung bzw. Sicherung S schon daher axialkraft-stabil ist. Der Riegelkopf wird nicht verwürgt.

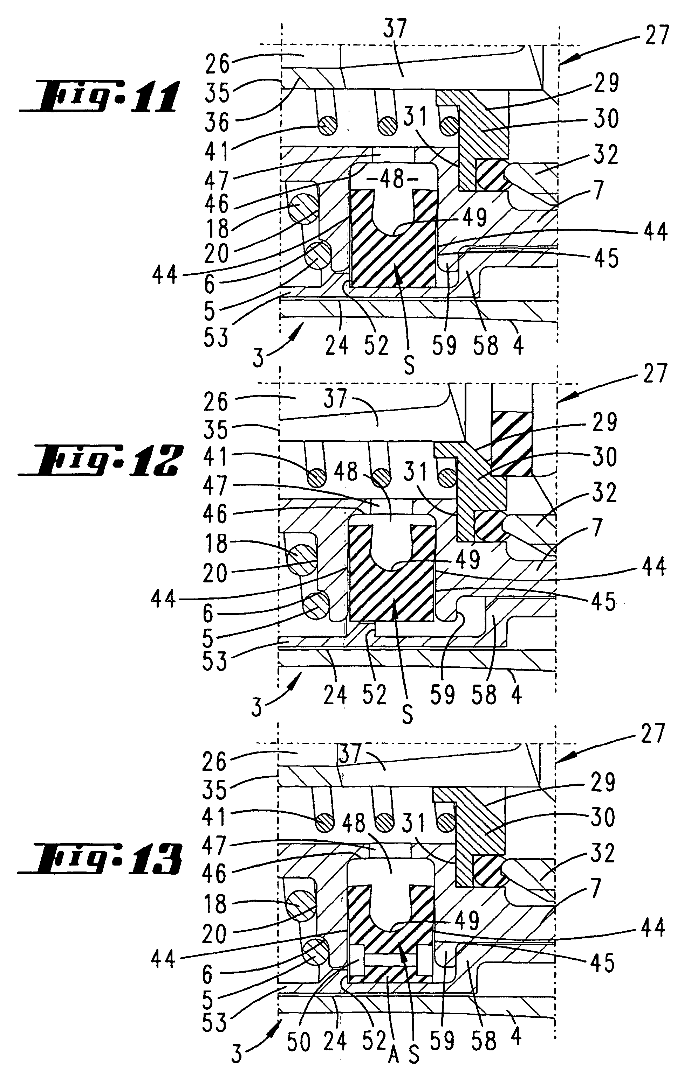

Bei hinsichtlich des Druckes höher ausgelegten Versionen kann die aus den Figuren 13 bis 15 ersichtliche Weiterbildung von Nutzen sein. Die fußt auf einer Armierung A des axialkraft-stabilen Außenparts der Sicherung S bzw. Dichtung.

Besagte Armierung A verkörpert sich im Hinblick auf Figur 13 in einem Kranz von Stiften 50. Die sind randnah eingelagert und in einer Mittelzone abgesetzt. Dies ergibt eine willkommene Axialsicherung. Es ist nur ein sektoraler Abschnitt dieser Sicherung S wiedergegeben mit einem winkelgleich beabstandeten Kranz von Stiften 50. Letztere schließen mit ihren Stirnflächen bündig mit den Breitseiten der Sicherung S ab.

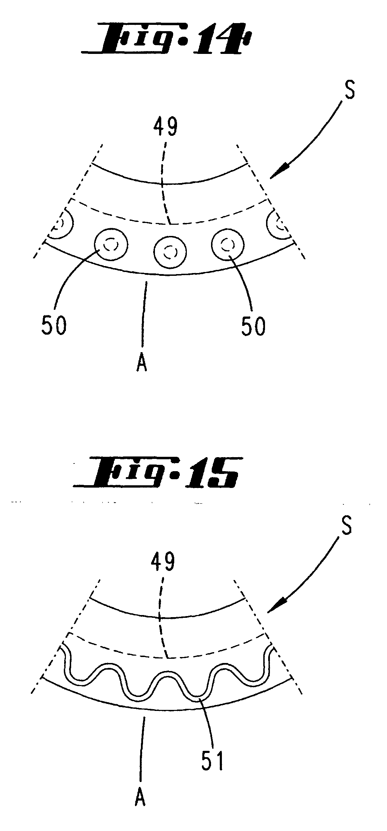

Gemäß Variante gemäß Figur 15 besteht kein Abstand zwischen den Mitteln der Armierung A; vielmehr ist ein zusammenhängender Wellring 51 eingebettet. Der Wellring 51 hat außer der geschilderten armierenden Wirkung auch noch die der Unterstützung der Rückstellkraft der Sicherung S. Auch hier liegen hinsichtlich der fluchtenden Ausrichtung mit den Breitflächen gleiche Parameter zugrunde. Der Wellenring 51 ist mit der elastischen Einbettungsmasse der Dichtung flächenverhaftet.

Der Beitrag der Vierregelungshülse 4 zur erläuterten Sicherung S besteht in einem verriegelungshülsenseitigen Umfangsvorsprung 52 als Anschlag. Im Blockierungszustand befindet sich der Sperrkopf der Sicherung S mit diesem nach radial innen vorragenden Umfangsvorsprung 52 in Eingriff.

Konkret befindet sich der Umfangsvorsprung 52 an einem in der Verriegelungshülse 4 anschlagbegrenzt axial verlagerbar aufgenommenen ersten Schieber 53. Letzterer führt sich mit seinem Rücken an der Innenwandung 24 der Verriegelungshülse 4. Die ragt mit ihrem der Kupplungsfuge 9 zugewandten Ende in den Wirkungsbereich des axial verlagerbaren Ringflansches 8.

In Grundstellung, also gekuppelt, entkuppelt beziehungsweise in Kupplungsbereitschaftsstellung, erstreckt sich die den Umfangsvorsprung 52 bildende Nase radial fluchtend zu der die Zentriermulde 6 und Stützfläche 20 aufweisenden Ringwand des Matrizengehäuses 7.

Der erste Schieber 53 wirkt mit einem ebenfalls axial anschlagbegrenzt verlagerbaren zweiten Schieber 54 zusammen.

Auch der führt sich mit seinem Rücken an der Innenwandung 24 der Verriegelungshülse 4.

Der zweite Schieber 54 ist zum einen in Bezug auf das Matrizengehäuse 7 axial verlagerbar. Den kupplungsfugenseitigen Endanschlag für den zweiten Schieber 54 bildet eine Schulter 55. Den Gegenanschlag in abgewandter Richtung bietet ein ringmutternartiger Ansatz des Verschlussstückes 32. Dieser Anschlag trägt das Bezugszeichen 56.

Ein Sprengring 57 am rechtsendigen Eingang der Verriegelungshülse 4 zieht den zweiten Schieber 54 über die federbelastete Verriegelungshülse 4 in die Grundstellung.

Den Anschlag des ersten Schiebers 53 bildet ein radialer Wandungsversatz 58 derselben. Der wirkt in Grundstellung anschlagbildend mit einem Ringkragen 59 des Matrizengehäuses 7 zusammen.

Erster Schieber 53 und zweiter Schieber 54 sind funktional gleichwirkend und können daher einstückig sein.
Eine geteilte Version hat indes z.B. den Vorteil eines materialbezogenen Kostenvorteils. Das Teil 54 könnte aus Kunststoff hergestellt sein, das andere, bezeichnet mit 53, muss aus lastaufnehmenden Gründen aus festerem Material bestehen, hier Metall.

Die zwischen dem Wandungsversatz 58 und dem Ümfangsvorsprung 52 bestehende innenseitige Ringnut des ersten Schiebers 53 bildet eine Formschlussverbindung zwischen Sperrkopf der Sicherung S und der Verriegelungshülse 4.

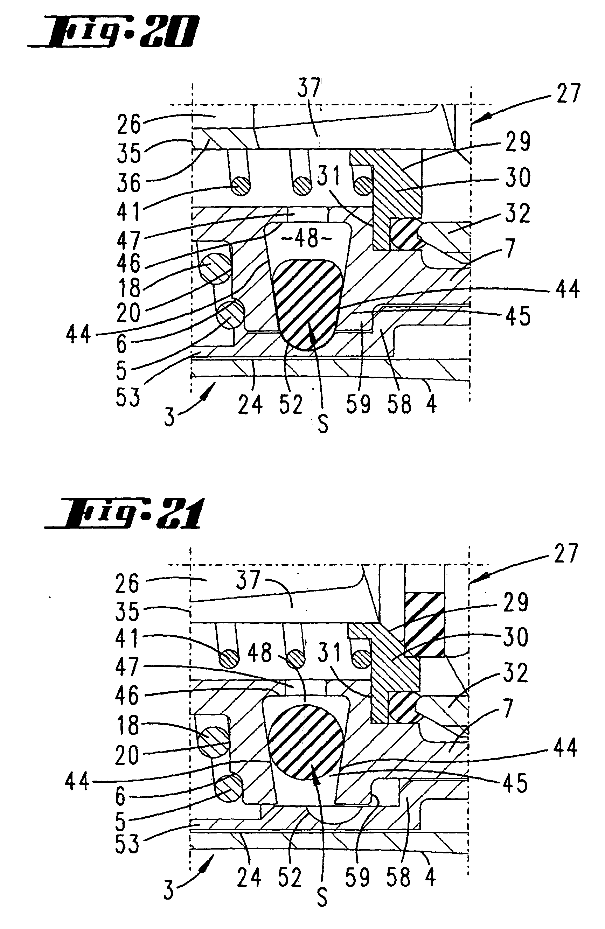

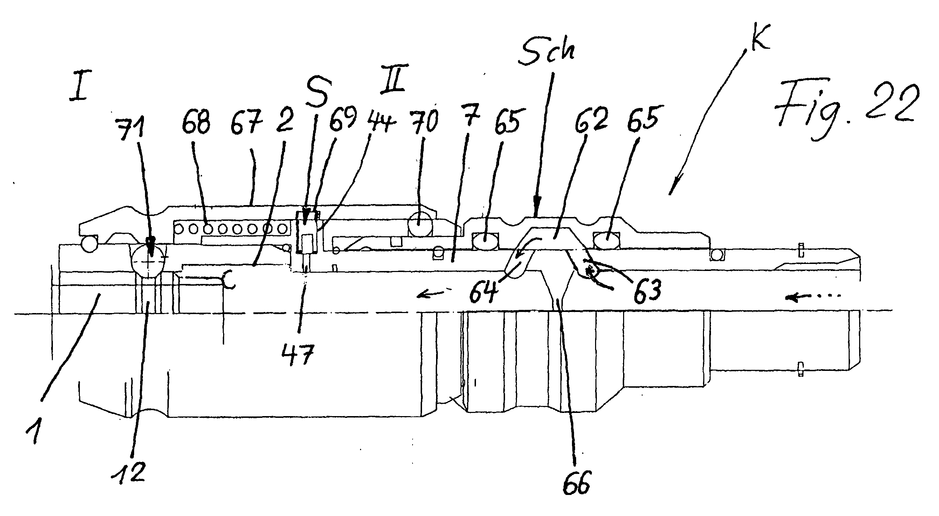

Die weiter oben angedeutete andere Querschnittsform der Sicherung verkörpert sich in einer O-Ring-Dichtung. Es sei auf die Figuren 20 und 21 verwiesen. Die in unbelastetem Zustand im Wesentlichen kreisrunden Querschnitt aufweisende O-Ring-Dichtung sitzt auch hier in einer allerdings anders profilierten Ringnut 45. Abweichend vom oben erläuterten Parallelverlauf der Führungen 44 kann eine derselben, dargestellt ist es jedoch an beiden, nach radial auswärts gehend verengend gestellt sein. Der Verlauf ist rotationssymmetrisch. Die Bezugsziffern sind sinngemäß übertragen, dies zum Teil ohne textliche Wiederholungen.

Erkennbar bilden die in der Variante zeichnerisch wiedergegebenen Führungen 44 eine im Querschnitt schwalbenschwanzförmige Ringnut 45. Beide Flanken der Nut sind gleich schräg ausgerichtet.

Auch hier ist die weitere Ausgestaltung so, dass die Sicherung S mit einem formangepasst gestalteten Umfangsvorsprung 52 des ersten Schiebers 53 zusammenwirkt. An den Vorsprung 52 schließt eine an den Umfangsvorsprung angepasste, axial anschließende Ringmulde an. In Sperrstellung tritt der sich formende, im Wesentlichen konvex gerundete Sperrkopf der Sicherung S in diese Ringmulde ein. Bei Druckabfall und dem dadurch stattfindenden Rückstellen der Sicherung S aus dem Wirkungsbereich des Umfangsvorsprunges 52 hebt der Sperrkopf aus.

Die Funktion ist wie folgt: Ausgehend von der gekuppelten Stellung gemäß Figur 1 beziehungsweise 7 befindet sich die Sicherung S durch den Druck des Mediums in sichernder Wirkstellung. Das Hauptriegelsystem H ist in Sperreingriff. Das Nebenriegelsystem N ist fangbereit vorgespannt. Die Federn 5,18 belasten die jeweiligen Sperrorgane 10,14 über die Ringflansche 8,15 entsprechend. Zum Entkuppeln wird ein erster Entriegelungsschritt ausgeübt. Dazu ist es notwendig, die Verriegelungshülse 4 zurückzubewegen. Das geht bis zum ersten Anschlag. Das Hauptriegelsystem H wird frei. Die Mitnahme geschieht über die Scheibe 25, welche das Sperrorgan 10 gegen die Schlitzöffnung gerichtet entriegelnd ausrückt.

Das in Lauerstellung befindliche Nebenriegelsystem N ist nun in die Ringnut 12 des druckbedingt ausweichenden Nippels 1 geschnellt. Das Nebenriegelsystem N ist sperraktiv. Der Ventilkörper 27 folgt dem begrenzt zurückfahrenden Nippel 1. Der Durchströmweg 26 ist schlagartig geschlossen. Das System entlüftet mittelseitig (siehe den Abstands-Spalt in Fig. 4. und 8. zwischen dem Nippelstirnende 43 und dem durch dieses beaufschlagbaren Schaftende des Ventilkörpers 27). Die Gefahr eines restdruckverursachten Schlagens der Schlauchleitung wird somit unterbunden. Nachfolgend tritt die Sicherung S mangels der expandierenden Kraft des Mediums außer Wirkung, d.h. in ihre entspannte Ausgangsstellung zurück. Ihr sperraktiver Part ist hinderungsfrei seitens des nasenartigen Umfangsvorsprungs 52 überlaufbar.

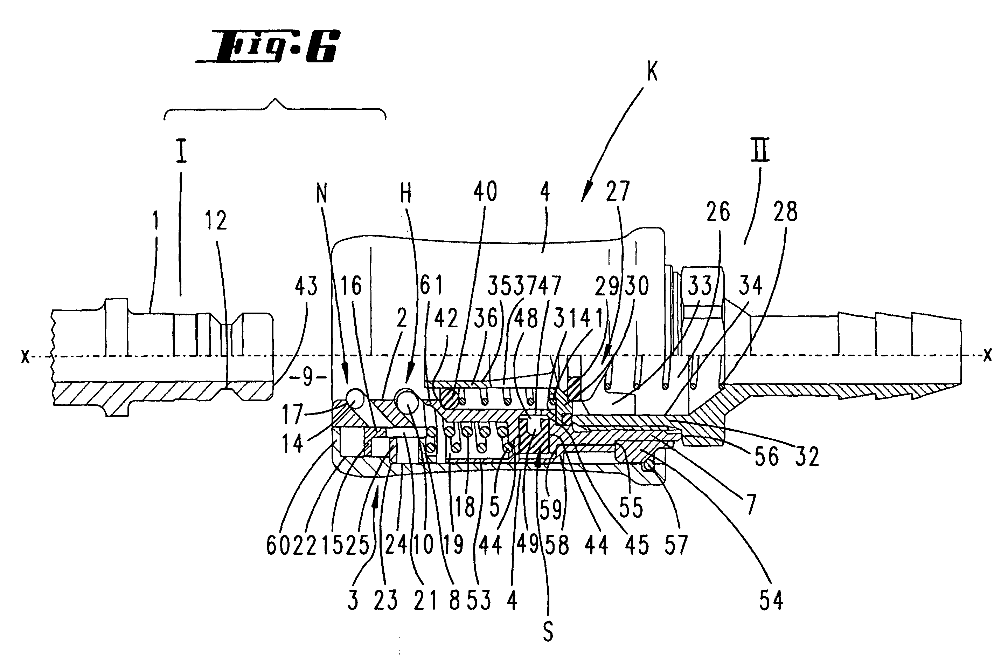

Demgemäß kann nun der zweite Entriegelungsschritt ausgeführt werden. Dies geschieht durch weiteres oder erneutes Verschieben der Verriegelungshülse 4 in kupplungsfugenabgewandter Richtung. Das ergibt sich darstellungsmäßig aus Figur 5 (bei Anschlag an 56). Nach Aufheben des ersten Anschlages tritt die Verriegelungshülse 4, genauer es treten der erste Schieber 53 und der zweite Schieber 54 gegen den ortsfesten zweiten Anschlag, bezeichnet mit 56. Dabei kommt eine Hublänge y zum Tragen, die ausreicht, um das Nebenriegelsystem N auszuklinken. Hierzu legt sich eine linksendige Stirnwand 60 der Verriegelungshülse 4 mitnehmend gegen das Sperrorgan 14. Dabei wird über die Scheibe 25 auch noch das Sperrorgan 10 des Hauptriegelsystems H ein wenig mitgenommen, wodurch die Walzenkörper des Sperrorgans 10 hinter eine an der Innenflanke der schrägen Schlitze 11 ausgebildete Nischenschulter 61 treten. Die verläuft parallel zur Längsmittelachse x-x. Y ist etwa der halbe Gesamthub der Verriegelungshülse 4. Besagte Nischenschulter 61 ist durch eine ausgangsseitige Schlitzerbreiterung des Schlitzes 11 des Hauptriegelsystems H erzielt. Sie ist axial orientiert und sitzt an der inneren Flanke des kupplungsfugenfernen Schlitzes 11. So wird bei entsprechender Relativbewegung kein weiteres Aussteuern der Walzenkörper erforderlich, was in eine Raumforderung überginge, die zu einer Vergrößerung der Kupplung respektive ihres Gehäuses führen würde.

Das alles geschieht entgegen der Kraft der Rückholfedern, also der Federn 5 und 18.

Nach Freigabe des Nebenriegelsystems N liegt die Situation gemäß Figur 6 beziehungsweise 10 vor, also entkuppelt und in Kupplungsbereitschaftsstellung befindlich.

Nun zu Fig. 22, verkörpernd die sogenannte Schieberlösung. Die wird bevorzugt eingesetzt für große Nennweiten und/oder hohen Drücken. Das Matrizengehäuse 7 ist erkennbar nach rechts freikragend verlängert. Es lagert den anschlagbegrenzt verschieblichen Schieber Sch. Der Schieber Sch stellt die Strömungsbrücke für das unter Druck stehende Medium. Brückenbildend ist eine schieberinnenseitige Ringnut 62. Die verbindet Zuströmkanäle 63 mit nippelseitig öffnenden Auslasskanälen 64 des Matrizengehäuses 7. Vorgelagert und nachgeschaltet liegen Dichtung 65, die in Nuten an der Innenseite des Schiebers Sch aufgenommen sind. Die Strömungsrichtung ist durch Pfeile markiert.

Der Brückenmittelebene erstreckt sich eine Sperrvuand 66. Die hält den Strömungsweg zu und erlaubt nur die angedeutete, bypassartige Umströmung. Zur Strömungsunterbrechung lässt sich der Schieber nach rechts verlagern. Der von dort her wirkende Hochdruck wird im Bereich nippelseitig der Sperrwand 66 minimiert. Der entsprechende Druckwechsel bzw. die Druckreduzierung erlaubt die Verlagerung der Sicherung S aus ihrer sperraktiven Verriegelungsstellung. Die entsprechende Wirkweise ist bezüglich des ersten Ausführungsbeispieles eingehend erläutert.

Das Verlagern der Verriegelungshülse 67 geschieht entgegen einer gehäusefest abgestützten Druckfeder 68. Die Verriegelungsnut der Sicherung S ist mit 69 bezeichnet.

Zum Entkuppeln der Sicherheitskupplung wird zunächst über den Schieber Sch der Druckabbau eingeleitet. Die linksseitige Dichtung 65 gerät auf den Zwischenmantelabschnitt zwischen den Kanälen 63 und 64. Eine am rechtseitigen Verriegelungshülsenende liegende Sicherheitskupplung wird ausgerückt. Der Überdruck aus dem Nippelraum wird abgebaut durch ein fugenseitiges Entspannen des Mediums. Ist der Druck so weit erniedrigt, dass auch die Sicherung S ausweicht, lässt sich die Verriegelung zwischen Matrizenteil II und Patrizenteil I, sprich Nippel 1, entgültig vornehmen. Das geschieht moderat und unter Vermeidung des peitschenartigen Schlagens. Die Verriegelung 71 ist detailiert bekannt und soll hier nicht weiter erörtert werden.

## Patentansprüche

1. Kupplung (K) für unter Druck stehende Medien, mit einem Patrizenteil (I) und einem Matrizenteil (II), gegebenenfalls einem steckabhängig entgegen Federkraft durch einen Nippel (1) des Patrizenteiles (I) verlagerbaren Ventilkörper (27), einer auf dem Matrizenteil (II) angeordneten Verriegelungshülse (4) und einer mediendruckabhängigen Sicherung (S), **dadurch gekennzeichnet, dass** die Sicherung (S) durch eine unter Mediendruck gegen ihre eigene Rückstellkraft expandierende und an dem Matrizenteil (II) sperrgehalterte Dichtung erreicht ist.

2. Kupplung nach Anspruch 1, **dadurch gekennzeichnet, dass** eine Zweischritt-Sicherung durch zwei axial hintereinander angeordnete, je duch eine gesonderte Feder (5, 18) beaufschlagte, radial mit dem Nippel (1) des Patrizenteiles (I) zusammenwirkende Sperrorgane (10, 14) erreicht ist.

3. Kupplung nach Anspruch 1 oder 2, **dadurch gekennzeichnet, dass** eine Ringdichtung (40) axial verschieblich und jedenfalls bei Betriebsbedingungen in Richtung des Patrizenteils (I) druckbelastet ist.

4. Kupplung nach Anspruch 3, **dadurch gekennzeichnet, dass** die Dichtung eine Umfangsdichtung ist.

5. Kupplung nach einem der vorhergehenden Ansprüche, **dadurch gekennzeichnet, dass** die Dichtung aus Gummi oder einem Elastomer besteht.

6. Kupplung nach einem der vorhergehenden Ansprüche, **dadurch gekennzeichnet, dass** die Dichtung einen radial orientierten Rechteckquerschnitt aufweist.

7. Kupplung nach einem der vorhergehenden Ansprüche, **dadurch gekennzeichnet, dass** der sperraktive Außenpart der Dichtung axialkraft-stabil ausgebildet ist.

8. Kupplung nach Anspruch 7, **dadurch gekennzeichnet, dass** eine Armierung des axialkraft-stabilen Außenparts vorgesehen ist.

9. Kupplung nach einem der vorhergehenden Ansprüche, **dadurch gekennzeichnet, dass** die Dichtung im Sperrzustand nur einen Bruchteil über matrizenteilfeste, die Axialbeweglichkeit der Dichtung hindernde Führungen (44) vorsteht.

10. Kupplung nach Anspruch 9, **dadurch gekennzeichnet, dass** eine Führung (44) radial verläuft und von einer auswärts verengend gestellten Flanke der Ringnut (45) gebildet ist.

11. Kupplung nach Anspruch 10, **dadurch gekennzeichnet, dass** auf dem Grund (46) der eine Druckkammer (48) stellenden Ringnut (45) ein Verbindungskanal (47) zum Durchströmweg (26) der Kupplung (K) hin realisiert ist.

12. Kupplung nach einem der Ansprüche 10 oder 11, **dadurch gekennzeichnet, dass** dem Grund der Ringnut (45) ein umlaufender Lippenspalt (49) der so U-förmigen Querschnitt aufweisenden Dichtung zugewandt ist.

13. Kupplung nach einem der vorhergehenden Ansprüche, **dadurch gekennzeichnet, dass** die Dichtung mit einem formangepasst gestalteten Umfangsvorsprung (52) eines ersten Schiebers (53) zusammenwirkt.

14. Kupplung nach einem der Ansprüche 9 bis 13, **dadurch gekennzeichnet, dass** beide Führungen (44) von schwalbenschwanzformenden Flanken der Ringnut (45) gebildet sind.

15. Kupplung nach Anspruch 14, **dadurch gekennzeichnet, dass** der Umfangsvorsprung (52) an einem in der Verriegelungshülse (4) anschlagbegrenzt axial verlagerbar aufgenommenen ersten Schieber (53) ausgeformt ist.

16. Kupplung nach Anspruch 15, **dadurch gekennzeichnet, dass** dem ersten Schieber (53) ein ebenfalls axial anschlagbegrenzt verlagerbarer Schieber (54) zugeordnet ist.

17. Kupplung nach Anspruch 16, **dadurch gekennzeichnet, dass** der erste und der zweite Schieber (53, 54) einteilig sind.

18. Kupplung nach einem der Ansprüche 14 bis 17, **dadurch gekennzeichnet, dass** die radiale Höhe des Umfangsvorsprunges (52) dem radialen Rückstellhub der Dichtung entspricht.

19. Kupplung nach einem der Ansprüche 15 bis 18, **dadurch gekennzeichnet, dass** eine an die ausragende O-Ring-Dichtungskontur angepasste, an den Umfangsvorsprung (52) axial kupplungsfugenabgewandt anschließende Ringmulde vorgesehen ist.

## Claims

1. Coupling (K) for pressurized media, with a male part (I) and a female part (II), optionally a valve body (27) which can be displaced insertion-dependently against spring force by a nipple (1) of the male part (I), a locking sleeve (4) disposed on the female part (II) and a media-pressure-dependent securing feature (S), **characterized in that** the securing feature (S) is achieved by a seal which expands under media pressure against its own restoring force and is held in an arrested manner on the female part (II).

2. Coupling according to Claim 1, **characterized in that** a two-step securing arrangement is achieved by two blocking members (10, 14) which are disposed axially one behind the other, are each acted upon by a separate spring (5, 18) and interact radially with the nipple (1) of the male part (I).

3. Coupling according to Claim 1 or 2, **characterized in that** a radial seal (40) is axially displaceable but pressure-loaded under operating conditions in the direction of the male part (I).

4. Coupling according to Claim 3, **characterized in that** the seal is a peripheral seal.

5. Coupling according to one of the preceding claims, **characterized in that** the seal consists of rubber or an elastomer.

6. Coupling according to one of the preceding claims, **characterized in that** the seal has a radially oriented rectangular cross-section.

7. Coupling according to one of the preceding claims, **characterized in that** the blocking-active outer part of the seal is formed to be stable in terms of axial force.

8. Coupling according to Claim 7, **characterized in that** a reinforcement of the outer part that is stable in terms of axial force is provided.

9. Coupling according to one of the preceding claims, **characterized in that**, in the blocking state, the seal protrudes only a fraction beyond guides (44) that are fixed to the female part and prevent axial movability of the seal.

10. Coupling according to Claim 9, **characterized in that** a guide (44) runs radially and is formed by a flank of the annular groove (45) that is positioned in an outwardly narrowing manner.

11. Coupling according to Claim 10, **characterized in that** a connecting channel (47) to the throughflow passage (26) of the coupling (K) is realized on the base (46) of the annular groove (45) providing a pressure chamber (48).

12. Coupling according to either of Claims 10 and 11, **characterized in that** a peripheral lip gap (49) of the seal having such a U-shaped cross-section faces the base of the annular groove (45).

13. Coupling according to one of the preceding claims, **characterized in that** the seal interacts with a shape-adaptedly configured peripheral projection (52) of a first slide (53).

14. Coupling according to one of Claims 9 to 13, **characterized in that** both guides (44) are formed by dovetail-forming flanks of the annular groove (45) .

15. Coupling according to Claim 14, **characterized in that** the peripheral projection (52) is fashioned on a first slide (53) accommodated in the locking sleeve (4) in an axially displaceable stop-limited manner.

16. Coupling according to Claim 15, **characterized in that** a slide (54), which is likewise axially displaceable in stop-limited manner, is associated with the first slide (53).

17. Coupling according to Claim 16, **characterized in that** the first and second slides (53, 54) are one-piece.

18. Coupling according to one of Claims 14 to 17, **characterized in that** the radial height of the peripheral projection (52) corresponds to the radial return displacement of the seal.

19. Coupling according to one of Claims 15 to 18, **characterized in that** an annular depression is provided which is adapted to the protruding O-ring seal contour and adjoins the peripheral projection (52) axially remote from the coupling joint.

## Revendications

1. Raccord d'accouplement(K) pour fluides sous pression, comprenant une partie poinçon (I) et une partie matrice ou femelle (II), le cas échéant avec un corps de valve (27) coulissant à travers un manchon fileté (1) de la partie poinçon (I) avec une force de ressort opposée au sens d'enfichage, un manchon de verrouillage (4) disposé sur la partie matrice (II) et une sûreté (S) liée à une pression de fluide, **caractérisé en ce que** la sûreté (S) est assurée par un joint d'étanchéité se dilatant sous l'effet d'une pression de fluide s'opposant à sa propre force de rappel et bloqué au niveau de la partie matrice (II).

2. Raccord selon la revendication 1, **caractérisé en ce qu'**une sûreté en deux temps est assurée grâce à deux organes de blocage (10, 14) coopérant radialement avec le manchon fileté (1) de la partie poinçon (I), organes disposés axialement l'un derrière l'autre, sollicités chacun par un ressort distinct (5, 18).

3. Raccord selon la revendication 1 ou 2, **caractérisé en ce qu'**un joint annulaire (40) est mobile axialement et est pressé dans tous les cas en conditions d'exploitation dans la direction de la partie poinçon (I).

4. Raccord selon la revendication 3, **caractérisé en ce que** le joint est un joint périphérique.

5. Raccord selon l'une des revendications précédentes, **caractérisé en ce que** le joint est en caoutchouc ou en élastomère.

6. Raccord selon l'une des revendications précédentes, **caractérisé en ce que** le joint présente une partie rectangulaire orientée radialement.

7. Raccord selon l'une des revendications précédentes, **caractérisé en ce que** la pièce externe de blocage actif du joint résiste aux forces axiales.

8. Raccord selon la revendication 7, **caractérisé en ce qu'**une armature de la pièce externe résistante aux forces axiales est prévue.

9. Raccord selon l'une des revendications précédentes, **caractérisé en ce que** le joint fait saillie en condition bloquée seulement d'une fraction par l'intermédiaire de guidages (44) solidaires de la partie matrice et empêchant le déplacement axial du joint.

10. Raccord selon la revendication 9, **caractérisé en ce qu'**un guidage (44) s'étend radialement et est constitué par un flanc se rétrécissant vers l'extérieur de la rainure annulaire (45) de joint.

11. Raccord selon la revendication 10, **caractérisé en ce qu'**il est prévu un canal de liaison (47) vers le passage d'écoulement (26) du raccord (K) au fond (46) de la rainure annulaire (45) constituant une chambre de pression (48).

12. Raccord selon l'une des revendications 10 ou 11, **caractérisé en ce qu'**un intervalle périphérique (49), entre lèvres est orienté vers le fond de la rainure annulaire (45), du joint présentant une partie en forme de U.

13. Raccord selon l'une des revendications précédentes, **caractérisé en ce que** le joint coopère avec une saillie périphérique (52) de forme appropriée d'un premier coulisseau (53).

14. Raccord selon l'une des revendications 9 à 13, **caractérisé en ce que** les deux guidages (44) sont constitués de flancs formant une queue d'aronde de la rainure annulaire (45).

15. Raccord selon la revendication, **caractérisé en ce que** la saillie périphérique (52) est conformée en un premier coulisseau (53) monté mobile axialement en étant limité par une butée dans le manchon de verrouillage (4).

16. Raccord selon la revendication 15, **caractérisé en ce qu'**un coulisseau (54) également mobile axialement en étant limité par une butée est associé au premier coulisseau (53).

17. Raccord selon la revendication 16, **caractérisé en ce que** le premier coulisseau (53) et le second coulisseau (54) sont d'une pièce.

18. Raccord selon l'une des revendications 14 à 17, **caractérisé en ce que** la hauteur radiale de la saillie périphérique (52) correspond à la course radiale de retour du joint.

19. Raccord selon l'une des revendications 15 à 18, **caractérisé en ce qu'**est prévueune cavité annulaire opposée à la jointure du raccord et se raccordant axialement à la saillie périphérique (52), en étant adaptée au contour en saillie du joint torique.
